# EUROPEAN PATENT APPLICATION

(11) **EP 2 305 414 A1**
(43) Date of publication of application: **06.04.2011**
(21) Application number: 09766522.8
(22) Date of filing: 01.06.2009
(51) Int. Cl.: B23K 26/06, B23K 26/073, B23K 26/08, G02F 1/13

(54) **LASER WORKING APPARATUS**

(30) Priority: 17.06.2008 JP 2008158510
(71) Applicant: Kataoka Corporation, Kyoto-shi Kyoto 601-8203 (JP)
(72) Inventor: SUZUKI, Masami, Kyoto-shi Kyoto 601-8203 (JP); NAKASHIBA, Shinichi, Yokohama-shi Kanagawa 222-0033 (JP)
(74) Representative: TBK-Patent
(86) International application number: PCT/JP2009/059971
(87) International publication number: WO 2009/154074

(57) **Abstract**

There is formed a laser processing apparatus including homogenization means 2 for substantially homogenizing output distribution of a laser beam L emitted from a laser oscillator 1, an image formation optical system 3 for forming an image of the laser beam L having the output distribution substantially homogenized by the homogenization means 2, and masking means 4 arranged in the vicinity of a position where the image of the laser beam L is formed by the image formation optical system 3, the masking means for cutting off the laser beam L and fixing the laser beam into a shape to be applied to an article to be processed 7. The output distribution of the laser beam L emitted by the laser oscillator 1 is originally close to Gaussian distribution. However, since the output distribution is once homogenized by the homogenization means 2 and then the laser beam passes through the masking means 4, the output distribution of the laser beam L to be applied to the article to be processed 7 is not inhomogeneous unlike the original laser beam L. As a result, improvement in processing quality is realized.

## Description

### TECHNICAL FIELD

The present invention relates to a laser processing apparatus for applying a laser beam to an article to be processed so as to perform processing.

### BACKGROUND ART

There is a known laser processing apparatus for fixing a laser beam emitted from a laser oscillator into a desired projection shape through masking means, and applying the laser beam to an article to be processed so as to perform processing (for example, refer to the following patent document). The laser processing apparatus of this type is for example used for correction of a defect pixel on a color filter and a substrate of a liquid crystal, or the like.

### PRIOR ART DOCUMENT

### PATENT DOCUMENT

Patent Document 1: Unexamined Japanese Patent Publication No. 2008-073718

### SUMMARY OF THE INVENTION

### PROBLEMS TO BE SOLVED BY THE INVENTION

With a conventional laser processing apparatus, a laser beam emitted from a laser oscillator is directly applied to masking means so as to fix a projection shape, and optically reduced and projected to an article to be processed.

However, output distribution, that is, brightness distribution of the laser beam emitted by the laser oscillator is inhomogeneous close to Gaussian distribution. Thus, the laser beam already fixed through the masking means still has inhomogeneous output distribution of the original laser beam. When such a laser beam is applied to the article to be processed, a problem of processing quality such as a problem that a defect pixel of a liquid crystal cannot be properly removed is generated.

The present invention has been made in view of the above problems, and an expected object thereof is to homogenize the output distribution of the laser beam to be applied to the article to be processed with a simple and inexpensive configuration so as to improve the processing quality.

### MEANS FOR SOLVING THE PROBLEMS

The present invention provides a laser processing apparatus including homogenization means for substantially homogenizing output distribution of a laser beam emitted from a laser oscillator, and masking means for cutting off the laser beam having the output distribution substantially homogenized by the homogenization means so as to fix the laser beam into a shape to be applied to the article to be processed. With this, the output distribution of the laser beam to be applied to the article to be processed through the masking means is homogenized, so that processing quality is improved.

The output distribution of the laser beam immediately after passing through the homogenization means is substantially homogeneous. However, while the laser beam is gradually spread as being propagated through space, the output distribution is biased. When an image formation optical system for forming an image of the laser beam at an outgoing end of the homogenization means is provided, and the masking means is arranged in the vicinity of a position where the image of the laser beam is formed by the image formation optical system, the output distribution of the laser beam immediately after passing through the homogenization means can be surely reproduced on the masking means, so that quality of the laser beam to be applied to the article to be processed is guaranteed, and the processing quality can be more improved.

Examples of the homogenization means can include an optical fiber, a kaleidoscope, a diffraction optical element, and a homogenizer. When the optical fiber is used among the above elements, not only cost is low but also degrees-of-freedom of designing the laser processing apparatus is increased in comparison to a case where the other elements are used. Specifically, positions of the masking means, the article to be processed, and the like relative to the laser oscillator can be freely set.

### EFFECTS OF THE INVENTION

According to the present invention, the output distribution of the laser beam to be applied to the article to be processed can be homogenized with a simple and inexpensive configuration, so that the processing quality can be improved.

### BRIEF DESCRIPTION OF THE DRAWINGS

Fig. 1 is a configuration diagram schematically illustrating a laser processing apparatus according to an embodiment of the present invention.
Fig. 2 is a perspective view illustrating variable slits in the same laser apparatus.
Fig. 3 is a configuration diagram schematically illustrating a laser processing apparatus according to a modified example of the embodiment of the present invention.

### MODES FOR CARRYING OUT THE INVENTION

Hereinafter, an embodiment of the present invention will be described with reference to the drawings. A laser processing apparatus of the present embodiment is a laser repair apparatus for correcting and removing a defect pixel on a color filter and a substrate of a liquid crystal. Typically, a bright spot of a liquid crystal is corrected.

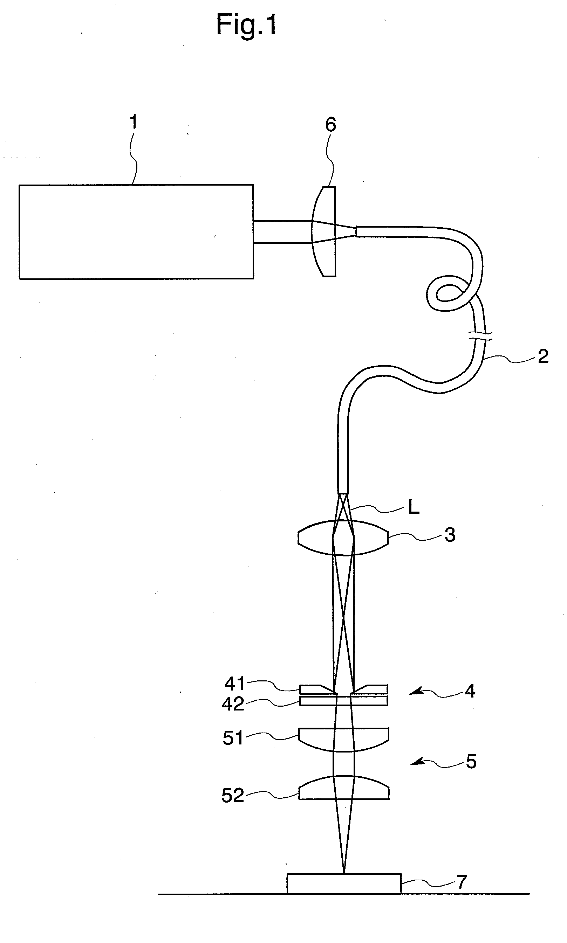

As illustrated in Fig. 1, the laser processing apparatus of the present embodiment has major constituent elements including a laser oscillator 1, homogenization means 2 for substantially homogenizing output distribution of a laser beam L emitted from the laser oscillator 1, an image formation optical system 3 for forming an image of the laser beam L having the output distribution substantially homogenized through the homogenization means 2, masking means 4 arranged in the vicinity of a position where the image of the laser beam L is formed by the image formation optical system 3, the masking means for fixing the laser beam, and an objective optical system 5 for reducing and projecting the laser beam L fixed through the masking means 4 to an article to be processed 7.

In the present embodiment, the homogenization means 2 is formed with using an optical fiber. A collective lens 6 is generally provided between the laser oscillator 1 and an incident end of the optical fiber 2. The laser beam L entered to the optical fiber 2 from the incident end is propagated while being repeatedly reflected inside, so that the output distribution is homogenized. At an outgoing end of the optical fiber 2, the laser beam L having brightness homogeneously spread is outputted along a shape of an outgoing end surface.

The image formation optical system 3 is formed with using an image formation lens. The image formation lens 3 magnifies and forms the image of the laser beam L having the homogenized output distribution at the outgoing end of the optical fiber 2.

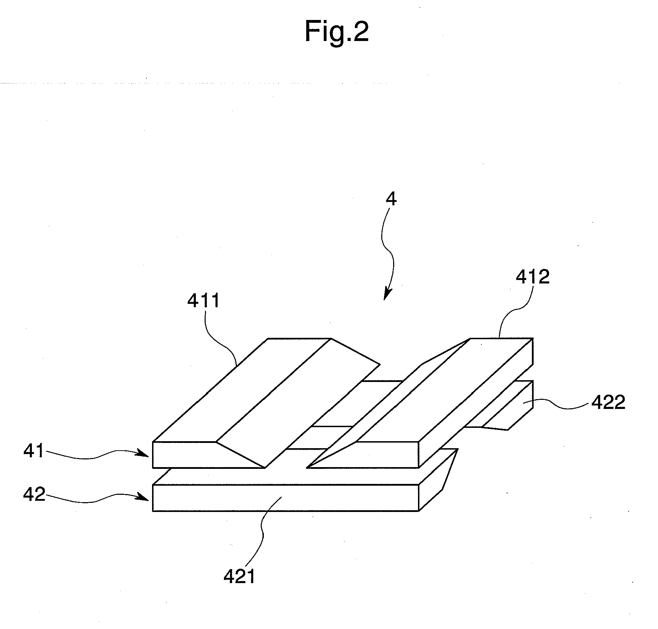

The masking means 4 is formed with using one or a plurality of variable slits 41, 42 having variable opening width. The variable slits 41, 42 cut off an edge of the laser beam L emitted from the optical fiber 2. In the present embodiment, a first variable slit 41 and a second variable slit 42 crossing an optical axis are provided as the masking means 4. As illustrated in Fig. 2, the first variable slit 41 has a pair of slit plates 411, 412 facing each other and having a changeable separation distance, and the second variable slit 42 has a pair of slit plates 421, 422 facing each other and having a changeable separation distance. A slit opened and formed by the first variable slit 41 and a slit opened and formed by the second variable slit 42 cross each other, and an overlapped part of both the slits serves as a mask pattern through which the laser beam L passes. This mask pattern is formed into a substantially square shape as seen from an optical axis direction, and has variable size. Desirably, the variable slits 41, 42 are positioned so that the mask pattern exists on a plane where the image formation lens 3 forms the image of the outgoing end surface of the optical fiber 2. However, a distance between the image formation lens 3 and the variable slits 41, 42 is allowed to be extended or contracted within a range where the output distribution of the laser beam L cut out by the mask pattern is homogeneous so that required machining quality can be realized.

The objective optical system 5 is formed with using a collimation lens 51 for making the laser beam L passing through the variable slits 41, 42 into a parallel beam, and an objective lens 52 for collecting the laser beam L made into the parallel beam so as to irradiate the laser beam to the articles 7 to be processed. However, a detail of the objective optical system 5 is arbitrary.

The laser beam L emitted by the laser oscillator 1 originally has inhomogeneous output distribution close to Gaussian distribution. However, by entering the laser beam L to the optical fiber 2 and propagating the laser beam in the optical fiber 2, homogeneous output distribution can be obtained at the outgoing end of the optical fiber 2. By fixing this laser beam L into a square shape with the first variable slit 41 and the second variable slit 42 and reducing and projecting the laser beam to the article to be processed 7 through the objective optical system 5, preferable laser processing eliminating an influence of the inhomogeneous output distribution of the original laser beam L can be performed.

Further, in the present embodiment, the image of the laser beam L having ideal output distribution at the outgoing end surface of the optical fiber 2 is formed in the vicinity of the mask pattern formed by the variable slits 41, 42. Thereby, irrespective of an optical path between an output end of the optical fiber 2 and the variable slits 41, 42, the laser beam L having the ideal output distribution can be reproduced in the vicinity of the mask pattern. Then, a desired projection shape corresponding to the mask pattern is cut out from the laser beam L of the already formed image and applied to the article to be processed 7. Therefore, quality and reliability of the laser processing can be largely improved.

According to the present embodiment, the laser processing apparatus including the homogenization means 2 for substantially homogenizing the output distribution of the laser beam L emitted from the laser oscillator 1, and the masking means 4 for cutting off the laser beam L having the output distribution substantially homogenized by the homogenization means 2 and fixing the laser beam into a shape to be applied to the article to be processed 7 is formed. Thus, the output distribution of the laser beam L to be applied to the article to be processed 7 through the masking means 4 is homogenized, so that the machining quality is improved.

The image formation optical system 3 for forming the image of the laser beam L at the outgoing end of the homogenization means 2 is provided, and the masking means 4 is arranged in the vicinity of the position where the image of the laser beam L is formed by the image formation optical system 3. Thus, the output distribution of the laser beam L immediately after passing through the homogenization means 2 can be surely reproduced on the masking means 4, so that the quality of the laser beam L to be applied to the article to be processed 7 is guaranteed, and the machining quality can be more improved.

The optical fiber is used as the homogenization means 2. Thus, not only cost is relatively low but also degrees-of-freedom of designing the laser processing apparatus is increased, for example, positions of the masking means 4, the article to be processed 7, and the like relative to the laser oscillator 1 can be freely set.

The masking means 4 is formed with using the variable slits 41, 42 having the variable opening width. Thus, the slit width can be varied in accordance with a processing object, so that the projection shape of the laser beam L to the article to be processed 7 can be adjusted.

The laser processing apparatus of the present embodiment is extremely useful as the laser repair apparatus for correcting the pixel of the liquid crystal.

It should be noted that the present invention is not limited to the embodiment described in detail above. For example, a mirror, a lens, or the like (not illustrated) can be provided at a point between the laser oscillator 1 and the incident end of the optical fiber 2, between the outgoing end of the optical fiber 2 and the image formation lens 3, between the image formation lens 3 and the variable slits 41, 42, in the middle of the objective optical system 5, or the like.

In the above embodiment, the optical fiber is used as the homogenization means 2. However, other than this, a kaleidoscope, a diffraction optical element, a homogenizer, and the like can be adopted.

In the above embodiment, the variable slits 41, 42 are used as the masking means 4. However, an aperture mechanism other than the variable slits 41, 42 may be adopted.

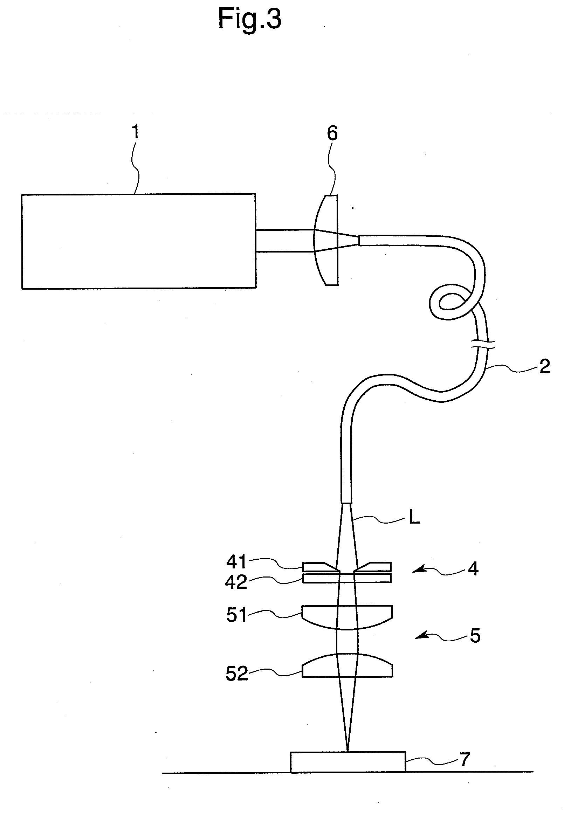

As illustrated in Fig. 3, even when a laser processing apparatus in which the image formation optical system 3 is not provided between the outgoing end of the optical fiber 2 and the masking means 4 is formed, an expected object of the present invention can be achieved.

Specific configurations of the other parts can be variously modified within a range not departing from the gist of the present invention.

### INDUSTRIAL APPLICABILITY

The present invention can be utilized as the laser repair apparatus for correcting and removing the defect pixel on the color filter or the substrate of the liquid crystal.

### DESCRIPTION OF REFERENCE SYMBOLS

- L:: Laser beam
- 1:: Laser oscillator
- 2:: Homogenization means
- 3:: Image formation optical system
- 4:: Masking means
- 5:: Objective optical system
- 7:: Article to be processed

## Claims

1. A laser processing apparatus for applying a laser beam to an article to be processed so as to perform processing, comprising:
homogenization means for substantially homogenizing output distribution of the laser beam emitted from a laser oscillator;
an image formation optical system for forming an image of the laser beam having the output distribution substantially homogenized by the homogenization means; and
masking means arranged in the vicinity of a position where the image of the laser beam is formed by the image formation optical system, the masking means for cutting off the laser beam so as to fix the laser beam into a shape to be applied to the article to be processed.

2. The laser processing apparatus according to claim 1, wherein the homogenization means is formed with using an optical fiber.

3. A laser processing apparatus for applying a laser beam to an article to be processed so as to perform processing, comprising:
an optical fiber for entering the laser beam emitted from a laser oscillator thereto, substantially homogenizing output distribution of the laser beam, and emitting the laser beam therefrom; and
masking means for cutting off the laser beam emitted from the optical fiber so as to fix the laser beam into a shape to be applied to the article to be processed.
